# EUROPÄISCHE PATENTSCHRIFT

(11) **EP 3 497 753 B1**
(45) Veröffentlichungstag und Bekanntmachung des Hinweises auf die Patenterteilung: **27.01.2021**
(21) Anmeldenummer: 17748447.4
(22) Anmeldetag: 26.07.2017
(51) Int. Cl.: H02K 5/16, H01R 13/187, H01R 43/16, H01R 13/11

(54) **FLACHES BLECHTEIL**
FLAT SHEET METAL PART
PIÈCE DE TÔLE PLATE

(30) Priorität: 12.08.2016 DE 102016114980
(43) Veröffentlichungstag der Anmeldung: 19.06.2019
(73) Patentinhaber: Amphenol-Tuchel Electronics GmbH, 74080 Heilbronnn (DE)
(72) Erfinder: KATZ, Wolfgang, 74211 Leingarten (DE); STOLZ, Joachim, 87754 Kammlach (DE); WACKER, Martin, 74613 Öhringen (DE)
(74) Vertreter: Staeger & Sperling Partnerschaftsgesellschaft mbB
(86) Internationale Anmeldenummer: PCT/EP2017/068902
(87) Internationale Veröffentlichungsnummer: WO 2018/028991

(56) Entgegenhaltungen:
- WO-A2-2007/084086
- DE-A1- 10 005 297
- DE-U1-202016 102 358
- GB-A- 2 398 680

## Beschreibung

Die Erfindung betrifft ein flaches Blechteil zur Ausbildung eines zylindrisch geformten Kontaktkäfigs.

Hochstromkontaktbuchsen sind beispielsweise als Radialkontaktbuchsen oder hyperbolische Kontaktbuchsen bekannt.

Aus der US 2002/0187686 A1 ist eine Buchse bekannt mit einem T-förmigen Anschluss sowie die Fertigung eines Lamellenkontaktes, bestehend aus einem Lamellenkäfig und einem gerollten Kontakthalter, die auf komplexe Art und Weise und unter Zuhilfenahme verschiedener Hilfsmittel in einer Art "Sanduhrform" verdreht werden.

Aus der US 4,657,335 A ist eine weitere Buchse beschrieben, die durch eine relativ-rotatorische Bewegung der Enden eines Lamellenkäfigs in eine Hülse ausgebildet wird. Zur Fixierung und Festlegung des Lamellenkäfigs in der Hülse werden an den jeweiligen Enden der Hülse entsprechende Ringe übergestülpt.

Aus der US 2003/0068931 A1 ist eine elektrische Steckverbinderbuchse bekannt, umfassend eine im wesentlichen zylindrische Buchsenhülse, die an ihren stirnseitigen Enden mit Ausnehmungen versehen ist, um ein hyperbolisch gedrehten Lamellenkäfig mit seinen Anschlusszungen an bzw. in diesen Ausnehmungen zu befestigen.

Eine weitere elektrische Steckverbinderbuchse ist aus der DE 10 2011 105 821 B4 bekannt. Diese zeigt eine zylindrische Buchsenhülse, wobei die Hülse mit einem Aufnahmeraum, in dem ein hyperbolisch gedrehter Lamellenkäfig angebracht ist, vorgesehen ist und die Buchsenhülse über eine erste und zweite Stirnfläche verfügt und wobei der Lamellenkäfig mit Anschlusszungen an der ersten und zweiten Stirnfläche der Buchsenhülse mit dieser formschlüssig verbunden ist und dass in dem Übergangsbereich zwischen der Buchsenhülse und der Anschlusszunge Durchbrüche angebracht sind und dass wenigstens eine der Anschlusszungen des Lamellenkäfigs durch einen der Durchbrüche hindurchragt.

WO 2007/084086 A2 offenbart ein flaches Blechteil zur Ausbildung eines zylindrisch geformten Kontaktkäfigs gemäß dem Oberbegriff des Anspruchs 1.

Alle diese im Stand der Technik bekannten Lösungen weisen jedoch den Nachteil auf, dass die Herstellung der Kontaktbuchsen sehr aufwendig ist, insbesondere auch die geometrischen Abmessungen und Toleranzen von Hülsen und Hülsengitter bzw. Lamellenkäfig aufeinander abgestimmt sein müssen und es fertigungsbedingt zu einem unerwünschten Toleranzfeld kommt, was erhebliche praktische Probleme bei der Montage und in der Anwendung aufwirft.

Um einfachere Lösungen vorzusehen, werden alternativ Hülsen in einem Rollbiegeprozess hergestellt.

Die im Stand der Technik bekannten "Schwalbenschwanzverbindungen", die als Verbindungselemente dienen und an denen sich gegenüberliegenden Seitenkanten eines Bleches angeformt werden, machen allerdings den Herstellungsprozess aufwendig und sind bedingt durch die Fertigungstoleranzen nur schwer herstellbar. Insbesondere bedarf es einer genauen Einpassung des Schwalbenschwanzes in die entsprechende Gegenkontur, um einen stabilen Halt herzustellen und wobei andererseits ein gewisses Montagespiel dazu führt, dass im Rollbiegeprozess die stirnseitigen Enden nicht aneinander fluchten und eine unerwünschte Stufe entsteht.

Eine solche beispielhafte Schwalbenschwanzverbindung ist z. B. aus der US 2002/0187686 A1 bekannt. Wie bereits erläutert, ist die Herstellung eines Hochstromkontaktelementes gemäß dem dort gezeigten Verfahren aufwendig, kompliziert und nicht wirtschaftlich. Ferner werden nicht die gewünschten passgenauen, stirnseitigen Ende erzielt, um ggf. auf eine das Kontaktelement umgebende Hülse komplett verzichten zu können.

Es ist daher Aufgabe der vorliegenden Erfindung, vorbesagte Nachteile zu überwinden und eine Hochstromkontaktbuchse wesentlich einfacher und wirtschaftlicher zu fertigen, wobei einerseits die Anzahl der Bauteile reduziert werden kann und andererseits eine gewünschte Herstellungsgenauigkeit erzielt werden kann.

Die Erfindung wird durch ein Blechteil zur Ausbildung eines zylindrisch geformten Kontaktkäfigs mit den Merkmalen von Patentanspruch 1 gelöst.

Ein Grundgedanke der vorliegenden Erfindung besteht darin, dass ein entsprechend als Blechteil ausgebildetes, vorzugsweise als Stanz-/Biegeteil ausgebildetes Blechteil vorgesehen wird, mit einer Fanggeometrie an Seitenkanten oder Seitenbereichen, die beim Umformen des Blechteils in einen zylindrisch geformten Kontaktkäfig, die stirnseitigen Kanten des zu formenden Kontaktkäfigs in eine gewünschte, vorzugsweise vollständig fluchtende Position führen.

Erfindungsgemäß ist daher vorgesehen, an den sich gegenüberliegenden im zylindrisch geformten Zustand aneinander anliegenden Seitenrändern des Blechteils entsprechende Fanggeometrien in Form von Vorsprüngen und Ausnehmungen vorzusehen, die eine Zwangsführung beim Umformen des Blechteils in einen Kontaktkäfig dienen.

Erfindungsgemäß ist daher ein flaches Blechteil zur Ausbildung eines zylindrisch geformten Kontaktkäfigs mit einem Aufnahmeraum zum Einstecken eines Kontaktes in Steckrichtung Z vorgesehen, wobei das Blechteil folgendes aufweist:
a. eine Grundform mit vier Rändern und vier Eckabschnitten, wovon zwei der Ränder parallel zueinander verlaufen und je einen Bundsteg ausbilden, die jeweils zwischen zwei Eckabschnitten verlaufen;
b. eine Vielzahl von Kontaktlamellen, die den einen Bundsteg mit dem anderen (gegenüberliegenden) Bundsteg verbinden,
c. wobei jeder Bundsteg im Bereich des jeweiligen Eckabschnittes einen den Bundsteg verlängernden Vorsprung aufweist und
d. wobei jeder Bundsteg im Bereich des jeweils anderen Eckabschnittes (d. h. des gegenüberliegenden Eckabschnittes) eine Ausnehmung aufweist, vorzugsweise eine zum Vorsprung korrespondierende Ausnehmung aufweist.

Dies hat den Vorteil, dass beim Rollen oder Umformen des Blechteils in eine zylindrische Kontaktkäfigform der Vorsprung gezielt in die Ausnehmung eintauchen kann und dabei die Kanten des Vorsprungs an der Kanten der Ausnehmung Führungsflächen ausbilden, die somit als Fanggeometrie dienen und den Kontaktkäfig in eine insgesamt gewünschte Endform hineinzwingen, bei dem die parallel zueinander verlaufenden Stirnseitenkanten entlang des Bundstegs bündig, d. h. ohne ein Versatz in Steckrichtung verlaufen.

Es ist mit Vorteil vorgesehen, dass der Vorsprung in Richtung des Verlaufes des Bundstegs aus dem Eckabschnitt hervorsteht oder aus diesem herausragt.

Es ist weiter mit Vorteil vorgesehen, wenn die Ausnehmung in ihrer Form korrespondierend zur Form des Vorsprungs so ausgebildet ist, dass beim Umformen des Blechteils in einen zylindrisch geformten Kontaktkäfig der Vorsprung in die Ausnehmung hineinragt.

Es ist weiter mit Vorteil vorgesehen, dass der Kantenverlauf der Kante im Bereich des Vorsprungs des jeweiligen Bundstegs wie folgt verläuft: zunächst linear entlang dem Rand des jeweiligen Bundstegs, dann kurvenartig gebogen um den jeweiligen Vorsprung herum in einem Bogen von etwa 80° bis 100°, vorzugsweise in einem 90°-Bogen.

Weiter vorteilhaft ist es, wenn sich die Krümmung nach dem 180°-Bogen in eine in entgegen gesetzte Richtung gekrümmten Bogen von 90° wechselt.

Es ist weiter mit Vorteil vorgesehen, wenn das Blechteil einen Kantenverlauf im Bereich der Ausnehmung des jeweiligen Bundstegs wie folgt aufweist: zunächst linear entlang dem Rand des jeweiligen Bundstegs, dann kurvenartig gebogen um einen etwa 90°-Bogen (in einer ersten Krümmungsrichtung entlang der Ausnehmung) und dann weiter in einem Bogen von etwa 180° herum unter Ausbildung eines Vorsprungs.

Dieser zuletzt genannte Vorsprung kann damit mit seiner Seitenkante an dem Vorsprung des gegenüberliegend angeordneten Eckabschnittes entlang gleiten, beim Umformen des Blechteils in eine zylindrisch geformte Kontaktkäfigform.

Es ist mit besonderem Vorteil vorgesehen, wenn die Kante im Bereich des zuvor genannten Bogens einen linearen Schrägabschnitt aufweist, der einem parallel verlaufenden linearen Schrägabschnitt an der gegenüberliegenden Kante im Bereich des etwa 90°-Bogens unmittelbar gegenüberliegt oder an diesem anliegt.

Anders ausgedrückt bedeutet dies, dass im Bereich der Fanggeometrie in jedem Eckbereich des Blechteils jeweils entlang der Kanten an der Fanggeometrie die zuvor genannten, im Wesentlichen parallel und linear verlaufenden Schrägabschnitte vorgesehen sind, die einerseits der Versteifung dienen, um Spannungsspitzen zu vermeiden und andererseits genaue Anlageflächen ausbilden, mit dem die Umformung des Bleches in eine gewünschte Endform mit minimaler Toleranz ermöglicht wird.

Es ist weiter erfindungsgemäß vorgesehen, wenn der Vorsprung einen zum linearen Schrägabschnitt der Kante im Bereich des Bogens in etwa parallel verlaufenden Schrägabschnitt aufweist.

Ein weiterer Aspekt der vorliegenden Erfindung betrifft einen zylindrisch geformten Kontaktkäfig, welcher aus dem zuvor genannten Blechteil umgeformt wurde und einen im Wesentlichen zylinderförmigen, mittig eingeschnürten Aufnahmeraum ausbildet.

Ein weiterer Aspekt der vorliegenden Erfindung betrifft ein Blechteil, wie zuvor beschrieben, welches dadurch gekennzeichnet ist, dass der Vorsprung neben der Ausnehmung mit seiner in Richtung zum Rand orientierten Seitenkante im Bereich des 90°-Bogens gegen die gegenüberliegende Seitenkante des Vorsprungs an der anliegt.

Es ist weiter vorteilhaft, wenn dieser Vorsprung in die Ausnehmung unter Bildung eines stirnseitigen Spalts mit der stirnseitig gegenüberliegenden Kante eintaucht.

Anders ausgedrückt bedeutet dies, dass im gerollten Zustand des Blechteils in Form eines zylindrisch geformten Kontaktkäfigs der Vorsprung stirnseitig nicht bis an die gegenüberliegende Kante der Ausnehmung ragt, sondern ein Spalt zwischen der stirnseitigen Kante am Vorsprung und der Kante an der Ausnehmung ausgebildet wird.

Weitere Ausgestaltungen der Erfindung ergeben sich aus den Patentansprüchen sowie den Figuren und der dazugehörigen Figurenbeschreibung, wobei die Figuren folgendes darstellen:
- Fig. 1: eine schematische Ansicht eines Ausführungsbeispiels eines Blechteils in der Aufsicht;
- Fig. 2: ein zylindrisch geformter Kontaktkäfig ausgebildet aus einem Blechteil;
- Fig. 3: eine Ansicht des Kontaktkäfigs aus Fig. 2 in einer perspektivischen Darstellung;
- Fig. 4: ein Detail der erfindungsgemäßen Fanggeometrie des Ausführungsbeispiels aus der Fig. 2 und Fig. 3.

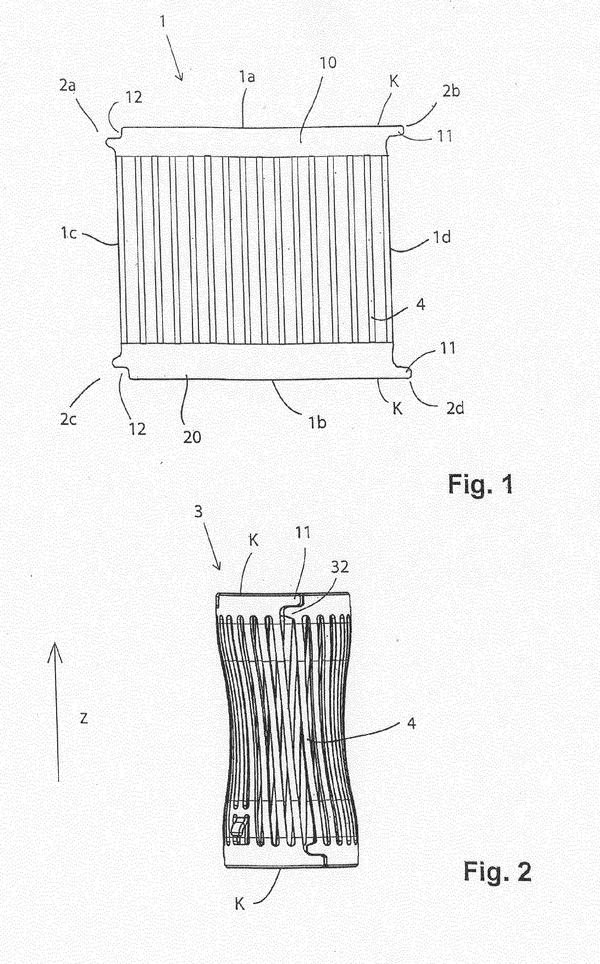

Im Folgenden wird die Erfindung anhand von Ausführungsbeispielen mit Bezug auf die Figuren 1 bis 4 näher erläutert, wobei gleiche Bezugszeichen auf gleiche funktionale und/oder strukturelle Merkmale hinweisen.

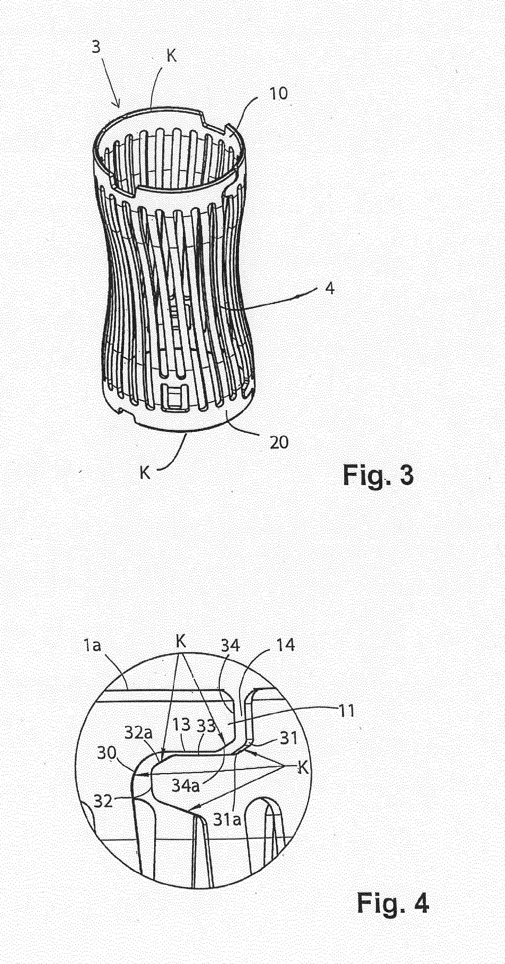

In der Fig. 4 ist zunächst eine Aufsicht auf ein abgewickeltes Blechteil 1 gezeigt. Das flache Blechteil 1 besitzt eine rechteckige Grundform mit Rändern 1a, 1b, 1c, 1d und vier Eckabschnitten 2a, 2b, 2c, 2d. Die zwei Ränder 1a, 1b verlaufen parallel zueinander. Diese Ränder stellen Ränder der Bundstege 10, 20 dar. Die Bundstege 10, 20 verlaufen jeweils zwischen Eckabschnitten 2a, 2b bzw. 2c, 2d.

Zwischen den Bundstegen 10, 20 verlaufen eine Vielzahl von Kontaktlamellen 4, welche die beiden Bundstege 10, 20 miteinander verbinden.

Jeder Bundsteg 10, 20 besitzt im Bereich des jeweiligen einen Eckabschnitts 2a, 2c einen den Bundsteg verlängernden Vorsprung 11 aus, was Teil der Fanggeometrie darstellt.

Ferner bildet jeder Bundsteg 10, 20 im Bereich des jeweils anderen Eckabschnitts 2b, 2d eine entsprechende Ausnehmung 12 aus, die ebenfalls Teil der erfindungsgemäßen Fanggeometrie darstellt.

Wie ferner zu erkennen ist, wird die vordere Kante K des Blechteils 1 im Bereich des Bundstegs 10 mit dem Bezugszeichen K versehen, während die hintere Kante des Bundstegs 20, d. h. des dem Bundsteg 10 gegenüberliegenden Bundestegs ebenfalls mit dem Bezugszeichen K versehen ist.

In den Figuren 2 und 3 sind Ausführungsbeispiele eines Kontaktkäfigs 3 gezeigt, welche aus einem erfindungsgemäßen Blechteil 1 geformt, insbesondere gerollt wurden. In dem Kontaktkäfig 3 ist ein Aufnahmeraum 40 zum Einstecken eines Kontakts in Steckrichtung Z ausgebildet.

Wie gut in der Fig. 2 zu sehen ist, verläuft die stirnseitige Kante K am ersten Bundsteg 10 parallel zur stirnseitigen Kante K am zweiten Bundsteg 20 und insbesondere im Bereich der Fanggeometrien in den Eckabschnitten 2a, 2b, 2c, 2d in einer Ebene, somit fluchtend und ohne einen stufenartigen Versatz.

In der Fig. 4 ist eine Detailansicht einer der Fanggeometrien dargestellt, die aus dem Vorsprung 11 und der Ausnehmung 12 sowie dem weiteren Vorsprung 32 gebildet sind.

Im Folgenden wird der Kantenverlauf K im Bereich des Vorsprungs 11 des Bundstegs 10 näher beschrieben. Dieser verläuft zunächst linear entlang dem Rand 1a des Bundstegs 10, dann kurvenartig gebogen um den jeweiligen Vorsprung 11 herum in einem Bogen 34 von etwa 180° und dann wiederum um einen in etwa 90°-Bogen 30 über in den Kantenabschnitt einer Kontaktlamelle 4.

Es ist weiter zu erkennen, dass der Kantenverlauf der Kante K im Bereich der Ausnehmung 12 des Bundstegs 10 wie folgt verläuft. Zunächst linear entlang dem Rand 1a des Bundstegs 10, dann kurvenartig gebogen um einen etwa 90°-Bogen 31 entlang der Ausnehmung 12 und weiter in einem Bogen von etwa 180° herum unter Ausbildung eines Vorsprungs 32, wobei die Kante danach ebenfalls in dem vorliegenden Ausführungsbeispiel in die Kante einer Kontaktlamelle 4 übergeht.

Weiter sind die linearen Schrägabschnitte 31a, 34a zu erkennen, die parallel oder im Wesentlichen parallel zueinander verlaufen und jeweils an der gegenüberliegenden Kante K im Bereich des etwa 90°-Bogens 31 vorgesehen sind.

Weiter ist zu erkennen, dass der Vorsprung 32 einen zum linearen Schrägabschnitt 34a der Kante K im Bereich des Bogens 34 in etwa parallel verlaufender Schrägabschnitt 32a aufweist. Beim Zusammenrollen stoßen die entsprechenden Schrägabschnitte 31a, 34a bzw. die Kanten K der jeweiligen Fanggeometrien aufeinander, so dass eine gewünschte Endposition des Rands 1a bzw. 1c erreicht wird.

Weiter vorgesehen ist es, wenn, wie in der Fig. 2 und Fig. 3 dargestellt, der zylindrisch geformte Kontaktkäfig 3 in der Mitte oder etwa in der Mitte eingeschnürt ist.

In diesem Zustand liegt der Vorsprung 32 neben der Ausnehmung 12 mit seiner in Richtung zum Rand 1a bzw. 1c orientierten Seitenkante 33 und zwar im Bereich des 90°-Bogens 31 gegen die jeweils gegenüberliegende Seitenkante 13 der Kante K des Vorsprungs 11 an.

Der Vorsprung 11 taucht in die Ausnehmung 12 unter Bildung eines stirnseitigen Spalts 14 gegenüber der stirnseitig gegenüberliegenden Kante K ein.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

### Bezugszeichenliste

- 1: Blechteil
- 1a, 1b, 1c, 1d: Ränder
- 2a, 2b, 2c, 2d: Eckabschnitte
- 3: Kontaktkäfig
- 4: Kontaktlamelle

- 10: Bundsteg
- 11: Vorsprung
- 12: Ausnehmung
- 13: Seitenkante
- 14: Spalt

- 20: Bundsteg

- 30: 90°-Bogen
- 31: 90°-Bogen
- 31a: Schrägabschnitt
- 32: Vorsprung
- 32a: Schrägabschnitt
- 33: Seitenkante
- 34: Bogen
- 34a: Schrägabschnitt

- 40: Aufnahmeraum

- K: Kante
- Z: Steckrichtung

## Patentansprüche

1. Flaches Blechteil (1) zur Ausbildung eines zylindrisch geformten Kontaktkäfigs (3) mit einem Aufnahmeraum (40) zum Einstecken eines Kontakt in Steckrichtung (Z), wobei das Blechteil (1) folgendes aufweist:
a. eine Grundform mit vier Rändern (1a, 1b, 1c, 1d) und vier Eckabschnitten (2a, 2b, 2c, 2d), wovon zwei der Ränder (1a, 1b) parallel zueinander verlaufen und je einen Bundsteg (10, 20) ausbilden, die jeweils zwischen zwei Eckabschnitten (2a, 2b bzw. 2c, 2d) verlaufen;
b. eine Vielzahl von Kontaktlamellen (4), die den einen Bundsteg (10) mit dem anderen Bundsteg (20) verbinden,
c. wobei jeder Bundsteg (10) im Bereich des jeweils einen Eckabschnittes (2a, 2c) einen den Bundsteg verlängernden Vorsprung (11) aufweist und
d. wobei jeder Bundsteg (10) im Bereich des jeweils anderen Eckabschnittes (2b, 2d) eine Ausnehmung (12) aufweist,
e. wobei der Kantenverlauf der Kante (K) im Bereich des, den Bundsteg jeweils verlängernden Vorsprungs (11) des jeweiligen Bundstegs (10, 20) wie folgt verläuft: linear entlang dem Rand (1a, 1c) des jeweiligen Bundstegs (10, 20), dann kurvenartig gebogen um den jeweiligen Vorsprung (11) herum in einem Bogen (34) von etwa 180° und dann um einen etwa 90°-Bogen (30),
f. wobei der Kantenverlauf im Bereich der Ausnehmung (12) des jeweiligen Bundsteges (10, 20) an dem die Ausnehmung (12) vorgesehen ist, wie folgt verläuft: linear entlang dem Rand (1a, 1c) des jeweiligen Bundstegs (10), dann kurvenartig gebogen um einen etwa 90°-Bogen (31) entlang der Ausnehmung (12) **dadurch gekennzeichnet, dass** weiter in einem Bogen von etwa 180° herum unter Ausbildung eines Vorsprungs (32) und
g. der Vorsprung (32) neben der Ausnehmung (12) mit seiner in Richtung zum Rand (1a, 1c) orientierten Seitenkante (33) im Bereich des 90°-Bogens (31) gegen die gegenüberliegende Seitenkante (13) des Vorsprungs (11) anliegt.

2. Blechteil (1) gemäß Anspruch 1, **dadurch gekennzeichnet, dass** der Vorsprung (11) in Richtung des Verlaufes des Bundsteges (10, 20) aus dem Eckabschnitt hervorsteht.

3. Blechteil (1) gemäß Anspruch 1 oder 2, **dadurch gekennzeichnet, dass** die Ausnehmung (12) in ihrer Form korrespondierend zur Form des Vorsprung (11) so ausgebildet ist, dass beim Umformen des Blechteils in einen zylindrisch geformten Kontaktkäfig (3) der Vorsprung (11) in die Ausnehmung (12) hineinragt.

4. Blechteil (1) gemäß einem der vorhergehenden Ansprüche, **dadurch gekennzeichnet, dass** die Kante (K) im Bereich des Bogens (34) einen linearen Schrägabschnitt (34a) aufweist, der einem parallel verlaufenden linearen Schrägabschnitt (31a) an der gegenüberliegenden Kante (K) im Bereich des etwa 90°-Bogens (31) unmittelbar gegenüberliegt oder an diesem anliegt.

5. Blechteil (1) gemäß Anspruch 4, **dadurch gekennzeichnet, dass** der Vorsprung (32) einen zum linearen Schrägabschnitt (34a) der Kante (K) im Bereich des Bogens (34) in etwa parallel verlaufenden Schrägabschnitt (32a) aufweist.

6. Blechteil (1) gemäß einem der vorhergehenden Ansprüche, welches zu einem zylindrisch geformten Kontaktkäfig (3) umgeformt wurde und einen im Wesentlichen zylinderförmigen, mittig eingeschnürten Aufnahmeraum (40) ausbildet.

7. Blechteil (1) gemäß Anspruch 1, **dadurch gekennzeichnet, dass** der Vorsprung (11) in die Ausnehmung (12) unter Bildung eines stirnseitigen Spaltes (14) mit der stirnseitig gegenüberliegenden Kante (K) eintaucht.

## Claims

1. Flat sheet-metal part (1) for forming a cylindrically shaped contact cage (3) having a receiving space (40) for insertion of a contact in the plugging-in direction (Z), wherein the sheet-metal part (1) comprises the following:
a. a basic shape having four edges (1a, 1b, 1c, 1d) and four corner portions (2a, 2b, 2c, 2d), of which two of the edges (1a, 1b) extend parallel to one another and each form a collar web (10, 20) extending in each case between two corner portions (2a, 2b and 2c, 2d, respectively);
b. a plurality of contact lamellae (4), which connect one collar web (10) to the other collar web (20),
c. wherein each collar web (10) has in the region of the respective one corner portion (2a, 2c) a projection (11) extending the length of the collar web and
d. wherein each collar web (10) has in the region of the respective other corner portion (2b, 2d) a recess (12),
e. wherein the path followed by the edge (K) in the region of the projection (11) of the respective collar web (10, 20) respectively extending the length of the collar web runs as follows: linearly along the edge (1a, 1c) of the respective collar web (10, 20), then arcuately in the manner of a curve around the respective projection (11) in an arc (34) of approximately 180° and then around an approximately 90° arc (30),
f. wherein the path followed by the edge in the region of the recess (12) of the respective collar web (10, 20) in which the recess (12) is provided runs as follows: linearly along the edge (1a, 1c) of the respective collar web (10), then arcuately in the manner of a curve around an approximately 90° arc (31) along the recess (12), **characterized in that** further around in an arc of approximately 180° while forming a projection (32) and
g. alongside the recess (12), the projection (32) lies with its side edge (33) that is oriented in the direction of the edge (1a, 1c) against the opposite side edge (13) of the projection (11) in the region of the 90° arc (31).

2. Sheet-metal part (1) according to Claim 1, **characterized in that** the projection (11) protrudes out of the corner portion in the direction of the path of the collar web (10, 20).

3. Sheet-metal part (1) according to Claim 1 or 2, **characterized in that** the recess (12) is formed in its shape so as to correspond to the shape of the projection (11) such that, when the sheet-metal part is formed into a cylindrically shaped contact cage (3), the projection (11) protrudes into the recess (12).

4. Sheet-metal part (1) according to one of the preceding claims, **characterized in that** the edge (K) has in the region of the arc (34) a linear sloping portion (34a), which lies directly opposite or lies against a parallel running linear sloping portion (31a) on the opposite edge (K) in the region of the approximately 90° arc (31).

5. Sheet-metal part (1) according to Claim 4, **characterized in that** the projection (32) has a sloping portion (32a) running approximately parallel to the linear sloping portion (34a) of the edge (K) in the region of the arc (34).

6. Sheet-metal part (1) according to one of the preceding claims, which has been formed into a cylindrically shaped contact cage (3) and forms a receiving space (40) that is substantially cylindrical but constricted in the middle.

7. Sheet-metal part (1) according to Claim 1, **characterized in that** the projection (11) enters the recess (12) while forming a gap (14) at the end face with the edge (K) lying opposite at the end face.

## Revendications

1. Pièce en tôle plate (1) destinée à la formation d'une cage de contacts (3) formée de manière cylindrique munie d'une chambre de logement (40) pour l'enfichage d'un contact dans une direction d'enfichage (Z), la pièce en tôle (1) comprenant les éléments suivants:
a. une forme de base munie de quatre bords (1a, 1b, 1c, 1d) et de quatre sections de coin (2a, 2b, 2c, 2d), parmi lesquels deux des bords (1a, 1b) s'étendent parallèlement l'un à l'autre et forment chacun une collerette (10, 20), qui s'étend respectivement entre deux sections de coin (2a, 2b ou 2c, 2d);
b. une pluralité de lamelles de contact (4), qui relient une collerette (10) à l'autre collerette (20),
c. chaque collerette (10) comprenant dans la zone de la section de coin respective (2a, 2c) une saillie (11) prolongeant la collerette, et
d. chaque collerette (10) comprenant dans la zone de l'autre section de coin respective (2b, 2d) un évidement (12),
e. l'extension de bord du bord (K) s'étendant de la manière suivante dans la zone de la saillie (11), prolongeant respectivement la collerette, de la collerette respective (10, 20): linéairement le long du bord (1a, 1c) de la collerette respective (10, 20), puis repliée en une courbe autour de la saillie respective (11) en un arc (34) d'environ 180°, puis autour d'un arc d'environ 90° (30),
f. l'extension de bord s'étendant de la manière suivante dans la zone de l'évidement (12) de la collerette respective (10, 20) sur laquelle l'évidement (12) est prévu: linéairement le long du bord (1a, 1c) de la collerette respective (10), puis repliée en une courbe autour d'un arc d'environ 90° (31) le long de l'évidement (12), **caractérisée en ce que** en outre autour d'un arc d'environ 180° avec formation d'une saillie (32) et
g. la saillie (32) s'appuie à côté de l'évidement (12) avec son bord latéral (33) orienté dans la direction du bord (1a, 1c) dans la zone de l'arc à 90° (31) contre le bord latéral opposé (13) de la saillie (11).

2. Pièce en tôle (1) selon la revendication 1, **caractérisée en ce que** la saillie (11) dépasse de la section de coin dans la direction de l'extension de la collerette (10, 20).

3. Pièce en tôle (1) selon la revendication 1 ou 2, **caractérisée en ce que** l'évidement (12) est configuré avec sa forme correspondant à la forme de la saillie (11), de telle sorte que, lors de la déformation de la pièce en tôle en une cage de contacts (3) formée de manière cylindrique, la saillie (11) pénètre dans l'évidement (12).

4. Pièce en tôle (1) selon l'une quelconque des revendications précédentes, **caractérisée en ce que** le bord (K) comprend dans la zone de l'arc (34) une section oblique linéaire (34a), qui est directement opposée à une section oblique linéaire (31a) s'étendant parallèlement sur le bord opposé (K) dans la zone de l'arc d'environ 90° (31) ou s'appuie sur celle-ci.

5. Pièce en tôle (1) selon la revendication 4, **caractérisée en ce que** la saillie (32) comprend une section oblique (32a) s'étendant approximativement parallèlement à la section oblique linéaire (34a) du bord (K) dans la zone de l'arc (34).

6. Pièce en tôle (1) selon l'une quelconque des revendications précédentes, qui a été déformée en une cage de contacts (3) formée de manière cylindrique et forme une chambre de logement (40) essentiellement cylindrique, enserrée au centre.

7. Pièce en tôle (1) selon la revendication 1, **caractérisée en ce que** la saillie (11) plonge dans l'évidement (12) avec formation d'une fente frontale (14) avec le bord opposé frontal (K).
